# EUROPEAN PATENT APPLICATION

(11) **EP 4 699 929 A1**
(43) Date of publication of application: **25.02.2026**
(21) Application number: 25195060.6
(22) Date of filing: 11.08.2025
(51) Int. Cl.: B64C 1/06, B64D 37/30

(54) **FUSELAGE STRUCTURE OF AN AIRCRAFT, METHOD FOR ASSEMBLING A FUSELAGE STRUCTURE AND AIRCRAFT COMPRISING A FUSELAGE STRUCTURE**

(30) Priority: 18.08.2024 DE 102024123523
(71) Applicant: AIRBUS Operations GmbH, 21129 Hamburg (DE)
(72) Inventor: GRAEBER, Rainer, 21129 Hamburg (DE); DIETRICH, Steffen, 21129 Hamburg (DE); LEICHSNER, Florian, 21129 Hamburg (DE)
(74) Representative: Isarpatent

(57) **Abstract**

The present invention provides a fuselage structure (100) of an aircraft, comprising: a first fuselage section (101) and a second fuselage section (102) connected to the first fuselage section (101), with the second fuselage section (102) comprising at least one first fuselage vessel (105a, b) extending the first fuselage section (101) in a longitudinal direction, with the first fuselage section (101) and the first fuselage vessels (105a) comprising circumferential flanges (111) arranged at longitudinal ends (120a, b) of the first fuselage section (101) and the first fuselage vessels (105a, b) extending radially in the first fuselage vessels (105a) and the first fuselage section (101) wherein a plurality of fastening means is provided extending through abutting flanges (111) of the first fuselage section (101) and the fuselage vessel (105a) to establish a force-fit connection between the first fuselage section (101) and the first fuselage vessels (105a), when assembled, and wherein the first fuselage vessel (105a) provides a storage space for at least one tank structure (107a, b), a method for assembling a fuselage structure (100) of an aircraft and an aircraft comprising such a fuselage structure (100).

## Description

The present invention pertains to a fuselage structure of an aircraft, a method for assembling a fuselage structure and an aircraft comprising the fuselage structure.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft.

Hydrogen propelled aircraft are a key technology for reduced in-flight emission aviation that requires technological adaptations in the systems employed in such aircraft. One of these systems is the energy storage system or tank installed in an aircraft fuselage. Some aircrafts use an articulated hinge or door that allows loading and removal of components like a cylindrical, large cryogenic H2 tank, but use a design principle based on a latching or locking mechanisms in combination with a hinged door. Since these aircraft designs target daily opening and closure of the door and use hinges or latches, relatively heavy components are employed, with hinged doors not being designed for continuous load transfer. Use of the above-mentioned designs for planned installation and/or removal of major aircraft components such as tanks or tank structures is thus limited as it would heavily impact the aircraft performance in terms of weight and might lead to avoidable product cost increase.

Against this background, it is an object of the present invention to find an aircraft fuselage structure and a method for assembling a fuselage structure that allows for facilitated assembly, removal and re-assembly of the fuselage to install and remove tanks, in particular LH2 tanks during production and repair or replacement in operation thereby minimizing related process times and that ensure continuous load transfer during operation.

This object is achieved by a fuselage structure of an aircraft having the features of claim 1, a method for assembling a fuselage structure having the features of claim 9, and an aircraft comprising a fuselage having the features of claim 15.

According to a first aspect of the invention, a fuselage structure of an aircraft is provided, comprising a first fuselage section and a second fuselage section connected to the first fuselage section, with the second fuselage section comprising at least one first fuselage vessel extending the first fuselage section in a longitudinal direction, with the first fuselage section and the fuselage vessels comprising circumferential flanges arranged at longitudinal ends of the first fuselage section and the fuselage vessel and extending radially in the first fuselage vessel and the first fuselage section and wherein a plurality of fastening means is provided ex-tending through abutting flanges of the first fuselage section and the fuselage vessel to establish a force-fit connection between the first fuselage section and the first fuselage vessel when assembled. and wherein the first fuselage vessel provides a storage space for at least one tank structure. This has the advantage that a spatial arrangement for tank structures, in particular hydrogen tank structures in a fuselage is provided that allows for easy assembly of fuselage sections before or after tank installation wherein the fuselage structure is able to continuously transfer loads in the assembled fuselage.

A further aspect of the invention lies in a method for assembling a fuselage structure of an aircraft, in particular a fuselage structure according to the invention. The method comprises the steps of providing a first fuselage section, providing a first fuselage vessel of a second fuselage section, connecting the first fuselage vessel to the first fuselage section to extend the first fuselage section in a longitudinal direction of the aircraft fuselage aligning the first fuselage section and the first fuselage vessel in an orbital plane, connecting the first fuselage vessel to the first fuselage section by a plurality of fastening means extending through abutting flanges provided at longitudinal ends of the first fuselage vessel and the first fuselage vessel facing each other, and arranging a tank structure within the first fuselage vessel.

This has the advantage that integration of the fuselage structure with tank structures and systems, in particular hydrogen tank systems allocated to the fuselage can be achieved in a fast and efficient manner. Hidden installation of tanks is avoided and only one structural opening of the fuselage structure is provided. A further advantage of the invention method is that during assembly or disassembly the tank structures can be easily accessed, thus significantly reducing manufacturing and maintenance time and related costs.
, and connecting an AFT section of the fuselage to the longitudinal end of the second fuselage section by a plurality of fastening means extending through abutting flanges provided at longitudinal ends of the second fuselage section and the AFT section facing each other.

A further aspect of the invention lies in an aircraft comprising a fuselage structure of the invention, wherein the first fuselage section is preferably configured as a pressurized cargo or passenger compartment and the second fuselage section is configured as an unpressurized storage tank compartment, with a pressure bulkhead being arranged between the first fuselage section and the second fuselage section. This has the advantage that accessibility to tanks and tank structures is facilitated which leads to reduced manufacturing and maintenance efforts. The fuselage structure further allows for reduction of empty space inside the fuselage at dedicated locations, which need to be accessed for installation, deinstallation and maintenance operation of the tank structure inside the fuselage. Access to the installation through the open fuselage structure is enabled thus allowing for quickly removing and reinstalling of tank structures without modifying or a need for repairing the fuselage structure. As a further advantage downtime for maintenance or replacement of a tank structure in airline operations is reduced as the fuselage structure does not need to be modified but just removed, wherein disassembling is significantly facilitated by the fuselage structure of the invention described herein.

Advantageous embodiments and further developments are apparent from the further dependent claims and from the description with reference to the figures.

According to another aspect of the invention, the at least one tank structure is configured as a pressurized hydrogen storage tank structure. It is an advantage that the fuselage structure according to the invention provides an efficient use of available space thus increasing the storage capability of in particular liquid or gaseous hydrogen required for hydrogen propelled aircraft.

According to an embodiment of the invention the circumferential surfaces of the first fuselage vessel forms a shell, also referred to as outer skin of the fuselage with the flanges attached to the skin in a form-fit manner. This has the advantage that flanges used for axial and shear load transfer can be incorporated during manufacturing the fuselage vessel or sections and adapted to the respective geometries and design of the vessel. Consequently, manufacturing efficiency of the primary structure of the fuselage is enhanced and related workload and manufacturing steps for adaptation reduced.

According to a further embodiment of the invention the first fuselage vessel has a circular or non-circular configuration aligned in an orbital plane with the first fuselage section. This has the advantage that the arrangement allows for the combination of a circular or non-circular fuselage vessel with similar or dissimilar shape to achieve an adaptation of the fuselage structure to similar or dissimilar shapes to the tank structures, used in particular to store hydrogen in the fuselage. Use of space available in the fuselage is maximised and storage capacity increased.

According to a further embodiment of the invention the fastening means are configured as one of a tension bolt and a conical shear bolt, wherein the fastening means are arrangeable alternating in a circumferential direction in the flanges. It is an advantage of this embodiment that assembly and disassembly is enabled by a combination of tension bolts distributed equally around the full perimeter of the vessel, so that axial loads that occur during aircraft operation in between fuselage section or vessel can be transferred in a distributed, non-discrete manner. Providing conical shear bolts provides a self-centring function to compensate for elastic deformation of the fuselage and the vessel in shape that arise due to different loading conditions, e. g. different hoisting of the fuselage vessel, fuselage vessel with or without tank structures being installed, in joined or disassembled condition. The self-centring function allows the fuselage section and vessel to adapt their shape to each other during the joining operation, without any measurements, adjustment or modification to the vessel being required. The conical shear bolts can equally serve to transfer shear loads that occur in operation of the aircraft from the fuselage vessel of the second fuselage section to the first fuselage section and/or a further fuselage vessel in the second fuselage section once the fuselage sections or vessels are joined. The shear transfer can also take place by friction between flanges due to the tension bolts tightening the assembly. In this condition conical shear bolts can contribute to shear transfer, while still providing the self-centring function for alignment of fuselage vessel or vessels and fuselage sections.

According to a further embodiment of the invention the first fuselage vessel of the second fuselage section defines an inner space, with the inner space having a shape essentially corresponding to the shape of the tank structure, wherein the tank structure comprises at least one of two storage tanks arranged side by side and one storage tank extending in a longitudinal direction of the second fuselage section. This has the advantage that the highest possible efficiency for tank structure volumes, in particular hydrogen storage, inside the fuselage vessel can be achieved and accessibility to the tank structure be improved. Preferably, the tank structure comprises a plurality of lines, in particular feeding lines and venting lines, with the lines guided along one of an inner or an outer surface of the aircraft fuselage. The advantage of the invention is that installation and removal of tank structures and related tank equipment, that is essential in particular to the operation of the hydrogen storage system is enabled in a fast and efficient way. The open junction of fuselage vessels allows for accessing the mechanical and electrical interfaces of the tank structure, in particular tank structures for hydrogen storage. Feeding lines of tank structure routings (fuel distribution lines, fuel venting lines, electric harnesses, fluid carrying lines for heat and cooling systems) through the primary structure, notably the outer fuselage shell or skin is enabled, while the fuselage section is open and accessible during assembly, thus increasing manufacturing efficiency and quality of the fuselage structure assembly.

According to a further embodiment of the invention the first fuselage section is configured as a pressurized compartment and the second fuselage section is configured as an unpressurized compartment, and wherein a pressure bulkhead is provided arrangeable between the first fuselage section and the second fuselage section. This has the advantage that the distinct and separated compartments of the fuselage can be provided that allow for an adaptation of the fuselage to the specific aircraft use and related spatial requirements.

According to a further embodiment of the invention the second fuselage section comprises at least one further fuselage vessel extending the first fuselage vessel in a longitudinal direction and being aligned in an orbital plane with the first fuselage vessel. Also the at least one further fuselage vessel comprises circumferential flanges arranged at longitudinal ends of the further fuselage vessel that extend radially in the fuselage vessel, with a plurality of fastening means being provided extending through abutting flanges of the first fuselage vessel and the at least one the further fuselage vessel to establish a force-fit connection between the fuselage vessels when assembled. This has the advantage that the second fuselage section can be further extended in a longitudinal direction towards the rear end of the aircraft using the advantages as described above. The fuselage structure thus also allows for the integration of more tanks within the fuselage in an easy and fast assembling manner.

According to a further embodiment of the invention the fuselage structure further comprises a rear end section arranged at longitudinal end of the second fuselage section, with the rear end section comprising a circumferential flange arranged at a longitudinal end of the rear end section facing the second fuselage section and ex-tending radially in the rear end section. Thereby a plurality of fastening means is provided extending through abutting flanges of the rear end section and the second fuselage section to establish a force-fit connection between the second fuselage section and the rear end section when assembled. This has the advantage, that the fuselage can be completed or closed by connecting the rear end section to the second fuselage section or a vessel forming the second fuselage section using the above-described advantages of the flanges and fastening means and to thus allow for an easy and fast assembly and disassembly of the fuselage structure with reduced efforts.

According to a further embodiment of the method the fastening means are configured as one of a tension bolt and a conical shear bolt, wherein the plurality of fastening means are arranged alternating in a circumferential direction of the flanges. It is an advantage that assembly and disassembly is enabled by a combination of tension bolts and conical shear bolts distributed equally around the full perimeter of the vessel, so that axial loads that occur during aircraft operation in between fuselage vessels or sections can be transferred in a distributed, non-discrete manner. Providing conical shear bolts additionally provides a self-centring function to compensate for elastic deformation of the fuselage vessel or vessels in shape that arise due to different loading conditions, e. g. different hoisting of the fuselage vessel, fuselage vessel with or without tank structures being installed) in joined or disassembled condition. The self-centring function allows the vessels and/or sections to adapt their shape to each other during the joining operation, without any measurements, adjustment or modifications to the vessel or vessels themselves being required. The conical shear bolts can equally serve to transfer shear loads that occur in operation of the aircraft from one vessel to the other once the vessels are joined. The shear transfer can also take place by friction between flanges due to the tension bolts tightening the assembly. In this condition conical shear bolts can contribute to shear transfer, while still providing the self-centring function for alignment of fuselage vessels and sections. During assembly conical shear bolts are mounted before installation of the tensioning bolt. In a first assembly step, the conical pins of the conical shear bolts are inserted in the flanges extending through holes provided therein. By tightening the conical shear bolts fuselage vessels are self-centring and pulled together. In a second assembly step, tension bolts are inserted in the remaining holes of the flanges and in an alternating arrangement with the conical shear bolts. Subsequent tightening the tension bolts after the fuselage vessels or section have been centred ensures a force-fit connection of the fuselage vessels or sections able to transfer axial loads between the sections.

It is also possible to arrange a further tank structure in the second fuselage section. This has the advantage that space provided in the second fuselage section can be efficiently used and storage capacity be increased. The invention fuselage structure however allows for full access to the tank structure and related supply lines during assembly and maintenance due to the assembly and disassembly options of the fuselage sections.

According to a further embodiment the method the tank structure comprises at least one of two tanks and one tank extending in a longitudinal direction of the second fuselage section, wherein arranging the tank structures comprises one of arranging the tanks side by side and one behind the other. This has the advantage that the usage of tanks with similar or different shape in the arrangement allows to maximize the volume efficiency by aligning fuselage vessel and tank geometry, in particular for hydrogen tanks that are designed as pressure vessels with a circular shape for best weight efficiency.

According to a further embodiment the method further comprises the step of connecting lines, in particular feed lines and vent lines, to the tank structure preferably before installation of tank structures in the fuselage vessel and guiding the lines along one of an inner or an outer surface of the fuselage in an open fuselage condition. This has the advantage that usage of space available in the fuselage can be optimized and full access to lines be ensured during assembly and disassembly of the fuselage during manufacture and maintenance.

According to a further embodiment the method further comprises the step of providing at least one further fuselage vessel extending in the longitudinal direction of the first fuselage vessel before or after arranging a tank structure within the first fuselage vessel, aligning the fuselage vessels in an orbital plane and connecting the fuselage vessels by a plurality of fastening means extending through abutting flanges provided at longitudinal ends of the fuselage vessels facing each other. This has the advantage that depending on the requirements and configuration of the fuselage stricture and the tank structures provided therein, an adaptation of the fuselages structure, in particular a longitudinal extension of the second fuselage section. can be achieved in an efficient and time saving manner without undue efforts in manufacturing and assembly.

According to a further embodiment the method further comprises the step of providing a fuselage rear section and connecting the fuselage rear section to the second fuselage section by a plurality of fastening means extending through abutting flanges provided at longitudinal ends of the second fuselage section and the fuselage rear section facing each other. This has the advantage, that the fuselage can be completed or closed by connecting the rear end section to the second fuselage section or a vessel forming the second fuselage section using the advantages described above regarding the flanges and fastening means, this allows for an easy and fast assembly and disassembly of the fuselage structure with reduced efforts. In a particular embodiment, the rear end section can form part of the first or the further fuselage vessel connected to the first fuselage section or an interposed fuselage vessel and be connected thereto using the flanges and fastening means in the above-described manner.

The invention will be explained in greater detail with reference to exemplary embodiments depicted in the drawings as appended.
- Fig. 1a, b: schematically depicts views of a fuselage structure according to an embodiment of the invention;
- Fig. 2a, b: schematically depicts sectional views of fuselage structures according to embodiments of the invention with alternative arrangements of tank structures within the fuselage structures,
- Fig. 3: schematically depicts a further embodiment of a of a fuselage structure according to the invention;
- Fig. 4a, b: depict a detailed view of a section of a fuselage structure according to a further embodiment of the invention;
- Fig. 5: depicts a fuselage structure according to a further embodiment of the invention; and
- Fig. 6: schematically depicts the steps of a method for assembling a fuselage structure of an aircraft according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

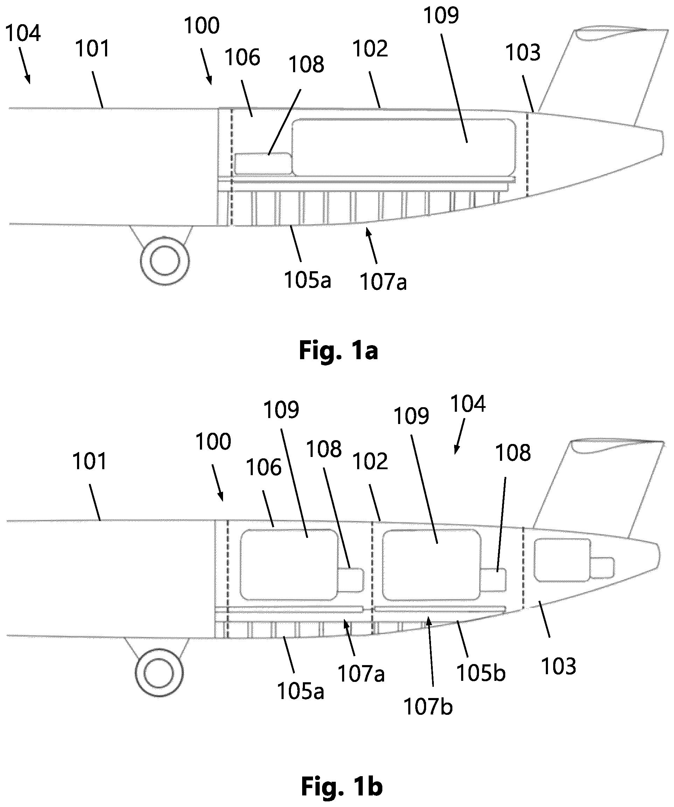

Fig. 1a, b schematically depict views of a fuselage structure 100 according to an embodiment of the invention. The fuselage structure 100 comprises a first fuselage section 101 and a second fuselage section 102 connected therewith, with the second fuselage section 102 extending the first fuselage section 101 in a longitudinal direction towards a rear end section 103 of the aircraft fuselage 104. The second fuselage sections 102 in Fig 1a the second fuselage section 102 comprises one fuselage vessel 105a joint to the first fuselage section 101 and the rear end section 103 , whereas in Fig 1b the second fuselage section comprises two fuselage vessels 105a, b joint to each other and interposed between the first fuselage section 101 and the rear end section 103. The fuselage vessels 105a, b define a compartment 106 for arranging tank structures 107a, b, in particular hydrogen storage tanks. In the embodiment depicted in Fig 1a, two tank structures 107a, b are arrange side by side, wherein the second tank structure 107b not visible. In Fig. 1a, a tank system 108 is positioned adjacent to each of the storage tanks 109 of the tank structure 107a, b and arranged in an area of the second fuselage section 102 facing the first fuselage section 101. In the embodiment depicted in Fig. 1b, storage tanks 109 are arranged one after the other in the second fuselage section 102 with an additional storage tank 109 placed in the rear end section 103 of the aircraft fuselage 104. In the embodiment depicted in Fig. 1a the tank structures 107a, b were introduced whereas in the embodiment shown in Fig. 1b, a first fuselage vessel 105a was connected with the first fuselage section 101 with a tank structure 107a being arranged therein before the second fuselage vessel 105b was orbitally joint thereto.

The fuselage structure 100 allows to reduce empty space inside the aircraft fuselage, which unavoidably needs to be accessed for installation, de-installation and maintenance operation of the tank structures 107a, b inside the aircraft fuselage 104 by enabling access to the installation through the open fuselage vessels. The assembly allows to quickly remove and reinstall a fuselage vessel 105a, b without modifying it, so that the downtime for maintenance or replacement of a tank structure 107a, b in airline operations is reduced as the second fuselage section 102 does not need to be modified but removed, only. The fuselage structures 100 depicted in Fig. 1a and b avoids hidden installation of storage tanks 109 and tank systems 108. In case more than one storage tank 109 is required by the system architecture an installation does not need to be unnecessarily removed to enable removal of a e.g. defect installations. During assembly of the fuselage structure 100 and installation of the tank structures 107a, b empty space inside the aircraft fuselage 104 effectively allows for parallel execution of installation work for tank structures 107a, b and tank systems 108. The fuselage structure 100 also provides improved accessibility to each tank structure 107a, b and related tank systems 108 due to the open fuselage vessel 105a, b. Working through the fuselage vessel 105a, b open during assembly furthermore allows for much better lighting and logistics conditions and better ergonomic working positions of operating staff in manufacturing.

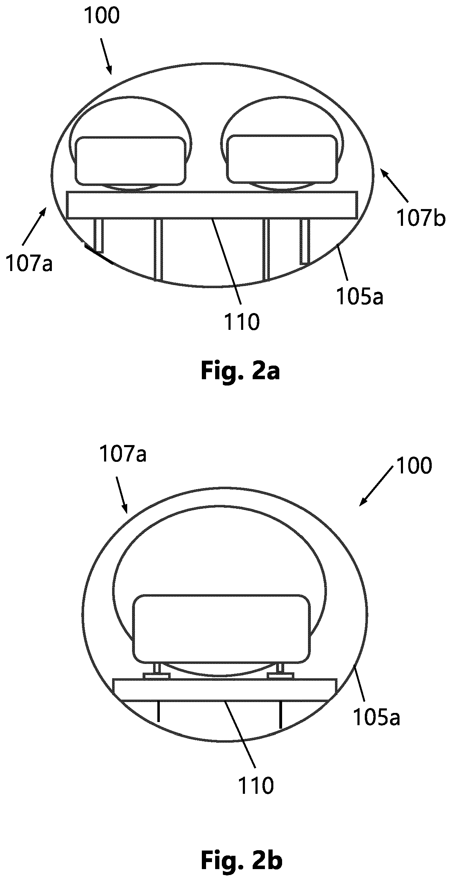

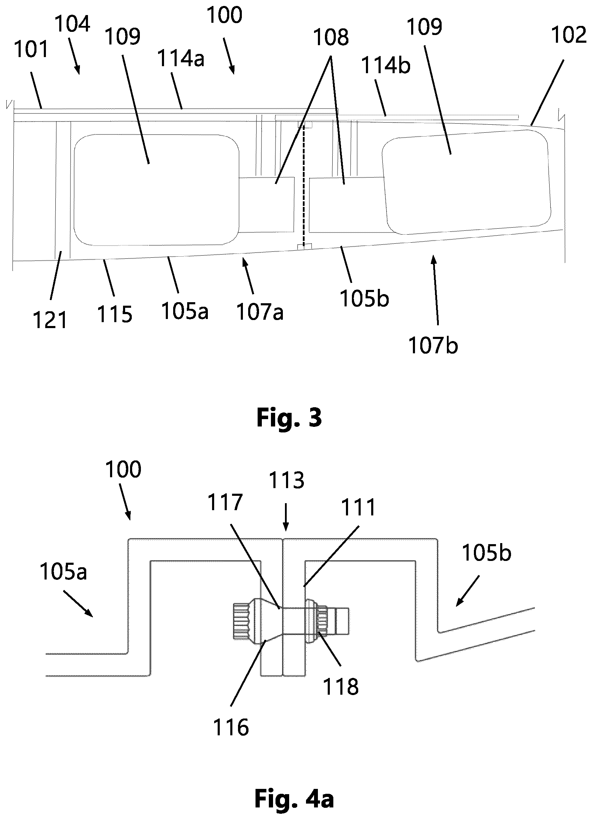

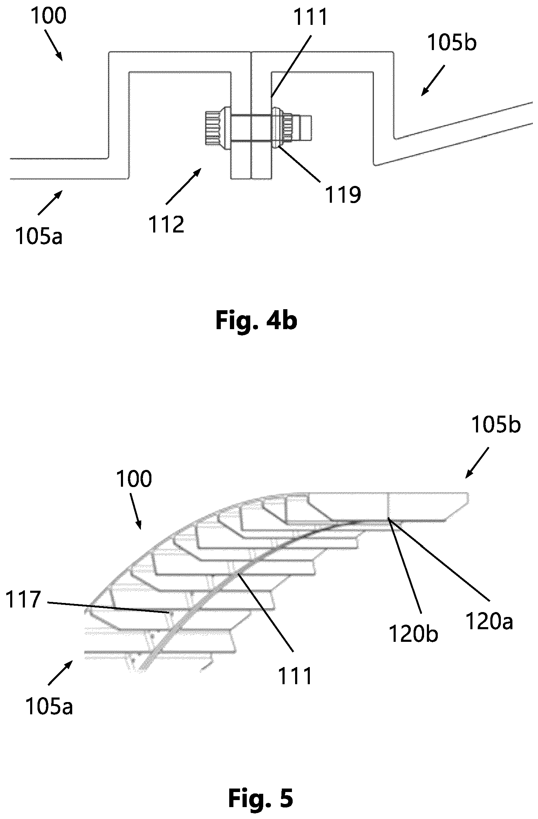

Fig. 2a and b schematically depicts sectional views of fuselage structures 100 of the invention with alternative arrangements of tank structures 107a, b within the fuselage structure 100. Therein fig. 2a depicts a sectional view of the fuselage structure 100 according to fig. 1a whereas fig. 2b corresponds to the embodiment of fig. 1b. In fig. 1a a side-by-side arrangement of two tank structures 107a, b is shown with the fuselage vessels 105a, b having a non-circular cross section. The fuselage vessel of fig. 2b has a circular cross section and houses a single tank structure 107a, b. A further tank structure 107a, b can be positioned in a longitudinal direction of the fuselage structure 100 behind the tank structure 107a shown in fig. 2b. The tank structures 107a, b in both embodiments are placed on flooring structures 110 extending horizontally in the fuselage vessels 105a, b and ensuring a safe and balanced positioning of the tank structures 107a, b within the fuselage vessels 105a, b. Fig. 3 schematically depicts a further embodiment of a fuselage structure 100 according to the invention. The fuselage structure 100 comprises a pressurized first fuselage section 101 serving as a cargo or passenger compartment and separated from the second fuselage section 102 by a pressure bulkhead 121. Orbitally joined to the first fuselage section 101 a second fuselage section 102 is arranged. The second fuselage section 102 consists of two fuselage vessels 105a, b joined via flanges 111 extending radially into the fuselage vessels 105a, b and abutting in the assembled state. Connection of fuselage vessels 105a, b is established using tension bolts 112 and conical shear bolts 113 inserted in the flanges 111. Tension bolts 112 and conical shear bolts 113 will be described in more detail in connection with figs. 4a and 4b. Inside the second fuselage section 102 a total of two tank structures 107a, b, each comprising a pressurized hydrogen storage tank 109 and a hydrogen tank system 108 attached thereto are implemented and positioned with the hydrogen tank systems 108 of each tank structure 107a, b facing each other. The hydrogen tank system 108 is connected to a plurality of lines 114a, b such as fuel distribution lines, fuel venting lines, electric harnesses, fluid carrying lines for heat and cooling systems. The lines 114a, b are guided in the second fuselage section 102 and extend in a vertical direction with respect to the aircraft fuselage 104 longitudinal extension. The lines 114a, b are guided through the outer shell 115 of the aircraft fuselage 104 with the fuselage vessels 105a, b providing a primary structure of the aircraft fuselage 104. The lines 114a, b exiting the aircraft fuselage 104 are further guided along the fuselage 104 outer shell 115 and extend horizontally in a longitudinal direction of the aircraft to supply the aircraft propulsion system with hydrogen. Since the lines 114a, b are guided outside the second fuselage section 102, usage of internal space is optimized and accessibility to the lines 114a, b improved. The modular configuration of the second fuselage section 102 allows for efficient and ergonomically handling during assembly, disassembly and maintenance of the lines 114a, b through the open fuselage vessel 105a, b.

Fig. 4a and b depict a detailed view of a section of a fuselage structure 100 according to a further embodiment of the invention. Fig. 4a shows a conical shear bolt 113 used in the assembly of the fuselage structure 100. The conical shear bolt 113 comprises a conical pin 116 extending through holes 117 provided in flanges 111 attached to the fuselage vessel 105a, b and a shear bolt nut 118 to secure and tighten the conical shear bolt 113. Conical shear bolts 113 are distributed equally around the full perimeter of the fuselage vessel 105a, b and provide for a self-centring function to compensate for elastic deformation of the fuselage vessel 105a, b in shape that can arise due to different loading conditions, e. g. different hoisting of the fuselage vessels 105a, b, fuselage vessels 105a, b with or without tank structures 107a, b being installed, in joined or disassembled condition. The self-centring function allows the two fuselage vessels 105a, b to adapt their shape to each other during the joining operation, without any measurements, adjustments or modifications to the fuselage vessels 105a, b themselves being required. The conical shear bolts 113 can equally serve to transfer shear loads that occur in operation of the aircraft from one fuselage vessel 105a, b to the other, once the fuselage vessels 105a, b are joined. The shear transfer can also take place by friction between flanges 111 due to the tension bolts 112 tightening the assembly. In this condition conical shear bolts 113 can contribute to shear transfer, while still providing the self-centring function for alignment of fuselage vessels 105a, b and fuselage sections 101, 102 as shown e.g. in figs. 1a and 1b.

Fig. 4b depicts a tension bolt 112 extending through the aforementioned flanges 111. Tightening the tension bolt nuts 119 after the fuselage vessels 105a, b or fuselages sections 101, 102 have been centred ensures a force-fit connection of the fuselage vessels 105a, b or fuselages sections 101, 102 and enables transfer of axial loads between the fuselage vessels 105a, b and fuselages sections 101, 102.

Fig. 5 depicts a fuselage structure 100 according to a further embodiment of the invention and represents a section of the orbital joining between two fuselage vessels 105a, b. The fuselage vessels 105a, b are provided with a flanges 111 extending radially inward into the fuselage vessels 105a, b with the flanges 111 comprising a plurality of holes 117 aligned during assembly. The holes 117 serve to receive conical shear bolts 113 and tension bolts 112 described in connection with figs. 4a and 4b in an alternating arrangement. The flanges 111 are connected to the longitudinal ends 120a, b of each fuselage vessel 105a, b or fuselage section 101, 102 and affixed to the outer circumferential structure of the fuselage vessel 105a, b in a force-fit connection, e.g. by riveting. Flanges 111 can also be configured to house the conical shear bolts 113 and tension bolts 112 as may be gathered from fig. 4a, and 4b. During assembly the conical pins 116 of the conical shear bolts 112 are inserted in the flanges 111 extending through holes 117 provided therein in a first assembly step. By tightening the shear bolt nuts 118 fuselage vessels 105a, b are self-centring and pulled together via the conical pin 116. In a second assembly step, tension bolts 112 are inserted in the remaining holes 117 of the flanges 111 in an alternating arrangement with the conical shear bolts 113. Subsequent tightening of the tension bolt nuts 119 after the fuselage vessels 105a, b or fuselage sections 101, 102 have been centred ensures a force-fit connection of the fuselage vessels 105a, b or fuselage sections 101, 102 able to transfer axial loads.

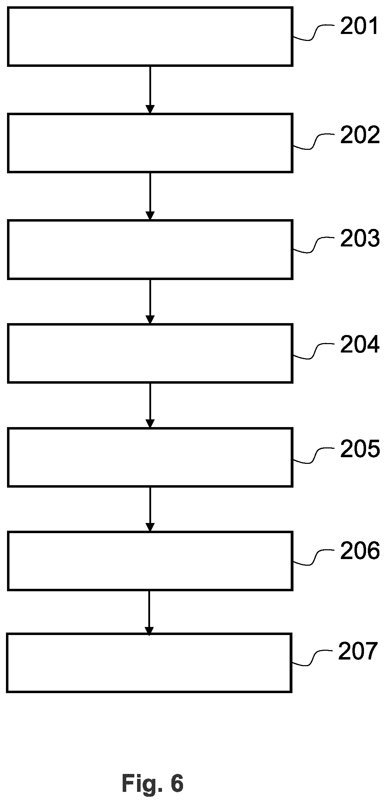

Fig. 6 schematically depicts the steps of a method for assembling a fuselage structure 100 of an aircraft according to an embodiment of the invention. In a first step 201 a first fuselage section 101 and a first fuselage vessel 105a of a second fuselage section 102 is provided whereas in a further step 202 the first fuselage vessel 105a is connected to the first fuselage section 101 to extend the first fuselage section 101 in a longitudinal direction of the aircraft fuselage 104. A tank structure 107a, b is arranged in step 203 within the first fuselage vessel 105a and at least one second fuselage vessel 105b of the second fuselage section 102 is provided in step 204. First fuselage vessel 105a and second fuselage vessel 105b are aligned in an orbital plane and a connection of the at least one second fuselage vessel 105b to the first fuselage vessel 105a is established by a plurality of fastening means extending through abutting flanges 111 provided at longitudinal ends 120a, b of the first and second fuselage vessel 105a, b facing each other. In a further step 205 of the assembly, conical pins 116 of conical shear bolts 113 are inserted in the flanges 111 extending through holes 117 provided therein, wherein by tightening the shear bolt nuts 118 of the conical shear bolts 113 fuselage vessels 105a, b are self-centring and pulled together. In a further step 206 tension bolts 112 are inserted in the remaining holes 117 of the flanges 111 and in an alternating arrangement with the conical shear bolts 113 and tension bolt nuts 119 tightened after the fuselage vessels 105a, b or fuselage section 101, 102 have been centred, to ensure a force-fit connection of the fuselage vessels 105a, b or fuselage sections 101, 102 thus enabling transfer of axial loads. After assembly of the fuselage vessels 105a, b of the second fuselage section 102, a rear end section 103 of the aircraft fuselage 104 is connected to the longitudinal end 120a, b of the second fuselage section 102 in a further step 207 by a plurality of fastening means extending through abutting flanges 111 provided at longitudinal ends 102a, b of the second fuselage section 102 and the rear end section 103 facing each other in an assembly as described before using conical shear bolts 113 and tension bolts 112.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: fuselage structure
- 101: first fuselage section
- 102: second fuselage section
- 103: rear end section
- 104: aircraft fuselage
- 105a, b: fuselage vessel
- 106: compartment
- 107a, b: tank structure
- 108: tank system
- 109: storage tank
- 110: flooring structures
- 111: flange
- 112: tension bolt
- 113: conical shear bolt
- 114a, b: line
- 115: shell
- 116: conical pin
- 117: hole
- 118: shear bolt nut
- 119: tension bolt nuts
- 120a, b: longitudinal end
- 121: pressure bulkhead
- 202: step
- 203: step
- 204: step
- 205: step
- 206: step
- 207: step

## Claims

1. Fuselage structure (100) of an aircraft, comprising: a first fuselage section (101) and a second fuselage section (102) connected to the first fuselage section (101), with the second fuselage section (102) comprising at least one first fuselage vessel (105a) extending the first fuselage section (101) in a longitudinal direction, with the first fuselage section (101) and the first fuselage vessel (105a) comprising circumferential flanges (111) arranged at longitudinal ends (120a, b) of the first fuselage section (101) and the fuselage vessel (105a, b) and extending radially in the first fuselage vessel (105a) and the first fuselage section (101), wherein a plurality of fastening means is provided extending through abutting flanges (111) of the first fuselage section (101) and the fuselage vessel (105a) to establish a force-fit connection between the first fuselage section (101) and the first fuselage vessel (105a) when assembled, and wherein the first fuselage vessel (105a) provides a storage space for at least one tank structure (107a, b).

2. Fuselage structure (100) according to claim 1, wherein the at least one tank structure (107a, b) is configured as a pressurized hydrogen storage tank (109).

3. Fuselage structure (100) according to claim 1 or 2, wherein the circumferential surface of the first fuselage vessel (105a) forms a shell (115) of the fuselage (104) with the flanges (111) attached to the shell (115) in a form-fit manner.

4. Fuselage structure (100) according to any of claims 1 to 3, wherein the first fuselage vessel (105a, b) has a circular or non-circular configuration aligned in an orbital plane with the first fuselage section (101).

5. Fuselage structure (100) according to any of claims 1 to 4, wherein the fastening means are configured as one of a tension bolt (112) and a conical shear bolt (113), wherein the fastening means are arrangeable alternating in a circumferential direction in the flanges (111).

6. Fuselage structure (100) according to any of claims 1 to 5, wherein the first fuselage vessel (105a) defines an inner space, with the inner space having a shape essentially corresponding to the shape of the tank structure (107a, b), wherein the tank structure (107a, b) comprises at least one of two storage tanks (109) arranged side by side and one storage tank (109) extending in a longitudinal direction of the first fuselage vessel(105a) and wherein the tank structure (107a, b) preferably comprises a plurality of lines (114a, b), in particular feeding lines and venting lines, with the lines (114a, b) guided along one of an inner or an outer surface of the aircraft fuselage (104).

7. Fuselage structure (100) according to any one of claims 1 to 6, wherein the first fuselage section (101) is configured as a pressurized compartment and the second fuselage section (102) is configured as an unpressurized compartment and wherein a pressure bulkhead (121) is provided arrangeable in between the first fuselage section (101) and the second fuselage section (102).

8. Fuselage structure (100) according to any one of claims 1 to 7, wherein the second fuselage section (102) comprises at least one further fuselage vessel (105b) extending the first fuselage vessel (105a) in a longitudinal direction and being aligned in an orbital plane with the first fuselage vessel (105a), with the at least one further fuselage vessel (105b) comprising circumferential flanges (111) arranged at longitudinal ends (120a, b) of the further fuselage vessel (105b) and extending radially in the further fuselage vessel (105b), with a plurality of fastening means being provided extending through abutting flanges (111) of the first fuselage vessel (105a) and the at least one the further fuselage vessel (105b) to establish a force-fit connection between the fuselage vessels (105a, b) when assembled.

9. Fuselage structure (100) according to any one of claims 1 to 8, further comprising a rear end section (103) arranged at a longitudinal end (120a, b) of the second fuselage section (102), with the rear end section (103) comprising a circumferential flange (111) arranged at a longitudinal end (120a, b) of the rear end section (103) facing the second fuselage section (102) and extending radially in the rear end section (103), with a plurality of fastening means being provided extending through abutting flanges (111) of the rear end section (103) and the second fuselage section (102) to establish a force-fit connection between the second fuselage section (102) and the rear end section (103) when assembled.

10. Method for assembling a fuselage structure (100) of an aircraft, in particular a fuselage structure (100) according to any of claims 1 to 9, comprising the steps of providing a first fuselage section (101), providing a first fuselage vessel (105a) of a second fuselage section (102), connecting the first fuselage vessel (105a) to the first fuselage section (101) to extend the first fuselage section (101) in a longitudinal direction of the aircraft fuselage (104) aligning the first fuselage section (101) and the first fuselage vessel (105a) in an orbital plane, connecting the first fuselage vessel (105a) to the first fuselage section (101) by a plurality of fastening means configured as one of a tension bolt (112) and a conical shear bolt (113) arranged alternating in a circumferential direction of the flanges (111) and extending through abutting flanges (111) provided at longitudinal ends (120a, b) of the first fuselage vessel (105a) and the first fuselage section (101) facing each other, and arranging a tank structure (107a, b) within the first fuselage vessel (105a).

11. Method according to claim 10, wherein the tank structure (107a, b) comprises at least one of two storage tanks (109) and one storage tank (109) extending in a longitudinal direction of the second fuselage section (102), wherein arranging the tank structures (107a, b) comprises one of arranging the storage tanks (109) side by side and one behind the other.

12. Method according to any one of claims 10 or 11, further comprising the step of connecting lines (114a, b), in particular feeding lines and venting lines, to the tank structure (107a, b) preferably before installation of tank structure (107a, b) in the fuselage vessel (105a) and guiding the lines (114a, b) along one of an inner or an outer surface of the aircraft fuselage (104).

13. Method according to any one of claims 10 to 12, further comprising the step of providing at least one further fuselage vessel (105b) extending in the longitudinal direction of the first fuselage vessel (105a) before or after arranging a tank structure (107a, b) within the first fuselage vessel (105a), aligning the fuselage vessels (105a, b) in an orbital plane and connecting the fuselage vessels (105a, b) by a plurality of fastening means extending through abutting flanges (111) provided at longitudinal ends (120a, b) of the fuselage vessels (105a, b) facing each other.

14. Method according to any one of claims 10 to 13, further comprising the step of providing a fuselage rear section (103) and connecting the fuselage rear section (103) to the second fuselage section (102) by a plurality of fastening means extending through abutting flanges (111) provided at longitudinal ends (120a, b) of the second fuselage section (102) and the fuselage rear section (103) facing each other.

15. Aircraft comprising a fuselage structure (100) according to any one of claims 1 to 9, wherein the first fuselage section (101) is preferably configured as a pressurized cargo or passenger compartment and the second fuselage section (102) is configured as an unpressurized storage tank compartment, with a pressure bulkhead being arranged between the first fuselage section (101) and the second fuselage section (102).
